# EUROPEAN PATENT APPLICATION

(11) **EP 3 819 344 A1**
(43) Date of publication of application: **12.05.2021**
(21) Application number: 19208246.9
(22) Date of filing: 11.11.2019
(51) Int. Cl.: C09D 11/10, B65B 55/00

(54) **USE OF CERTAIN POLYVINYL ACETALS AS BINDERS IN PRINTING INKS**

(71) Applicant: Kuraray Europe GmbH, 65795 Hattersheim (DE)
(72) Inventor: Mummy, Florian, 60325 Frankfurt am Main (DE); Frank, Michael, 55268 Nieder-Olm (DE)
(74) Representative: Janßen, Christian Oliver

(57) **Abstract**

The invention is directed to the use of certain polyvinyl acetals as binders in printing inks.

## Description

The invention is directed to the use of certain polyvinyl acetals as binders in printing inks.

The use of polyvinyl acetals, in particular polyvinyl butyrals, as binders in printing ink formulations has long been known. For this purpose, polyvinyl acetals which exhibit minimal viscosity in solution are often used. At the same time it is thus possible to achieve a high content of pigment and binding agent in the printing ink, which then leads to a desired high intensity of color. Such printing inks are widely used in the food packaging industry as almost all food packages are being printed on for information and advertising purposes.

Food packaging, especially those in direct contact with the food needs to be sterilized. As safety requirements in the food industry are becoming more and more stringent, sterilization conditions for the food packaging are becoming harsher, often requiring autoclave treatments at high temperatures and relative humidity. Polyvinyl chlorides have been widely used as ink binder since they are compatible with such conditions. However, due to concerns for the environment the food industry is starting to phase out the use of PVC in food packaging.

Thus, there is a need in the food industry for improved binders for ink formulations.

Therefore, one objective of the invention is to provide printing ink binders with improved stability against temperature and/or moisture, with an improved environmental impact and/or with a better economical profile in the production and use of the printing ink.

These and other objectives are surprisingly solved by the present invention.

Accordingly, the present invention concerns the use of a polyvinyl acetal as a binder in printing ink formulations wherein the polyvinyl acetal comprises at least two different acetal groups. Preferably, the acetal groups independently have 2 to 6 carbon atoms, most preferably the polyvinyl acetal comprises butyraldehyde and acetaldehyde acetal groups.

Polyvinyl acetals are polymers produced from the condensation of polyvinyl alcohol with aldehydes. For example, conventional polyvinyl butyrate (PVB) is produced by acetalisation of polyvinyl alcohol with butyraldehyde. The polyvinyl acetals used in the present invention are mixed acetals, i.e. they comprise at least two different acetal groups. In other words, the polyvinyl acetals as used in the invention comprise a first acetal group derived from the reaction of two hydroxyl groups of the respective polyvinyl alcohol with one aldehyde and at least a second acetal group derived from the reaction of two other hydroxyl groups of the respective polyvinyl alcohol with a second aldehyde, wherein the first aldehyde is different from the second aldehyde.

Preferably, the acetal groups individually have 2 to 6 carbon atoms, i.e. they derive from the condensation reaction with aldehydes with 2 to 6 carbon atoms. More preferably, they derive from at least two aldehydes chosen from the list consisting of methanal (formaldehyde), ethanol (acetaldehyde), n-propanal (propionaldehyde), isopropanol, n-butanal (butyraldehyde), iso-butanal, sec-butanal, tert-butanal, n-pentanal, neo-pentanal, iso-pentanal, sec-pentanal, sec-isopentanal and n-hexanal. Most preferably, they derive from the condensation reaction with acetaldehyde and butyraldehyde. Also preferably, they derive from the condensation reaction with three different aldehydes, more preferably acetaldehyde, butyraldehyde and isobutyraldehyde.

Preferably, 5 to 50%, more preferably 5 to 15%, and most preferably 10% of the total acetal groups derived from condensation with acetaldehyde. Also preferably, the remaining acetal groups derive from condensation with n-butanal.

A higher Tg of the polyvinyl acetals used in the present invention is advantageous for the present invention as a higher Tg can lead to an improved thermal stability of the printing ink. However, a higher Tg is usually associated with a higher viscosity, which has negative impact for the production of the printing ink, since inks with a higher viscous binder can take up less colorant/pigment. It has now been surprisingly found that the inventive materials show an increased Tg as compared to conventional PVB while maintaining a viscosity similar to standard PVB. Accordingly, the polyvinyl acetals used in the invention preferably have a glass transition temperature (Tg) of equal to or higher than 50, 55, 60, 65, 70, or 75 ºC. Also preferably, they have a Tg of equal to or less than 125, 120, 115, 110, 105, or 100 ºC. More preferably, the polyvinyl acetals used in the inventive process have a Tg of 70 to 120 ºC, most preferably of 75 to 115 ºC. Glass transition temperature (Tg) is measured according to ISO 11357-1 (DSC method). Also preferably, the polyvinyl acetal has a softening temperature of 130 - 220 ºC, measured by the ring and ball method (DIN ISO 4625).

The glass transition temperature is determined by means of differential scanning calorimetry (DSC) in accordance with DIN 53765 with use of a heating rate of 10K/min at a temperature interval of minus 50 °C to 150 °C. A first heating ramp, followed by a cooling ramp, followed by a second heating ramp was used. The position of the glass transition temperature was established on the measurement curve associated with the second heating ramp in accordance with DIN 51007. The DIN midpoint (Tg DIN) was defined as the point of intersection of a horizontal line at half step height with the measurement curve. The step height was defined by the vertical distance of the two points of intersection of the middle tangent with the base lines of the measurement curve before and after glass transition.

The content of residual polyvinyl alcohol in the polyvinyl acetals backbone used according to the present invention is preferably from 5 to 35% by weight, more preferably 10 to 30% by weight, and in particular 10 to 15% by weight.

Preferably, the degree of acetalisation in the polyvinyl acetals used in the inventive process is from 70 to 95%, preferably it is from 85 to 95%, specifically around 90%.

The polyvinyl alcohol content and polyvinyl acetate content of PVB were determined in accordance with DIN ISO 53401 (Acetate content) and DIN ISO 53240 (PVA content). The degree of acetalisation can be calculated as the remaining portion from the sum of polyvinyl alcohol content and polyvinyl acetate content determined in accordance with DIN ISO 53401/53240 needed to make one hundred. Conversion from % by weight into mol % is achieved by formulas known to the person skilled in the art.

Optionally, the material used for the inventive process comprises, other than the polyvinyl acetal, up to 20% by weight (based on the total weight of the composition) of one or more plasticizers. Any compound known to plasticize polyvinyl acetals may be used. Preferred plasticisers are diesters of aliphatic diols, in particular of aliphatic polyether diols and/or polyether polyols with aliphatic carboxylic acids, preferably diesters of polyalkylene oxides, in particular diesters of diethylene glycol, triethylene glycol and tetraethylene glycol with aliphatic (C6-C10) carboxylic acids, preferably 2-ethyl butyric acid and n-heptanoic acid, also diesters of aliphatic or aromatic (C2-C18) dicarboxylic acids, preferably adipine, sebacine and phthalic acid, with aliphatic (C4-C12) alcohols, preferably dihexyl adipate, phthalates, trimellitates, phosphates, fatty acid esters, in particular triethylene glycol-bis-(2-ethyl butyrate), triethylene glycol ethyl hexanoate (3G8), aromatic carboxylic acid esters, in particular dibenzoates and/or hydroxycarboxylic acid esters.

Also optionally, the material used for the inventive process comprises other components than the polyvinyl acetals as described above. For example, it may contain UV absorbers, antioxidants, optical brighteners, stabilisers, dyes, pigments, processing aids, organic or inorganic nanoparticles, pyrogenic silicic acid, surface-active substances and/or rheological modifiers.

Furthermore, the present invention concerns a printing ink comprising a polyvinyl acetal as a binder wherein the polyvinyl acetal comprises at least two different acetal groups, preferably the acetal groups independently have 2 to 6 carbon atoms and more preferably, the polyvinyl acetal comprises butyraldehyde and acetaldehyde acetal groups.

In addition to the printing ink binders according to the present invention, the printing ink may comprise other components chosen inter alia from colorants, for example insoluble organic and/or inorganic pigments or soluble dyes, especially organic pigments like PY13, PR57:1; PB15:3; PG7, PB61, PV23, titanium dioxide, carbon black, metallic effect pigments, e.g. powdered aluminum or brass, and additives like fillers, e.g. kaolin or chalk, acid catalysts, adhesion promoters, amine solubiliser, antifoam agents, biocides, dispersing agents, flow agents, jellifying agents, inhibitors, ink stabilisers, optical brighteners, photoinitiators, siccative agents, slip agents, suspension agents, thickeners, UV stabilisers, waxes, and/or wetting agents.

Furthermore, the present invention concerns a process for the sterilization of a food package comprising the steps of printing the food package with a printing ink according to the present invention and treating the food package in an autoclave. The autoclave treatment is preferably performed at a temperature from 100 to 150 ºC, more preferably from 120 to 130 °C. Also preferably, the autoclave treatment is performed in steam-saturated atmosphere, i.e. in an atmosphere where part of the water is used as a sterilization agent is condensed and the other part is in the vapor phase.

Methods for coating a substrate with the printing ink of the invention include well-known methods such as direct coating and printing. For directly coating the substrate with the printing ink, methods including curtain coating, flow coating and roll coating can be used. Where the printing ink composition is low in viscosity, direct coating such as spray coating can also be employed. Printing processes used for coating include offset printing, gravure offset printing, and gravure and flexographic printing processes.

The thickness of the coating film produced by these processes can be 0.25 to 25 micrometers, typically, 1 to 10 micrometers.

Substrates may include paper, wood, plastic, or textiles. In particular, printing inks of the invention may be applied to paper and films or sheets of polyethylene, polyvinyl chloride, polypropylene, polyester, polycarbonate, and polyimide, and paper treated with any of these materials.

The substrate may preferably be pre-treated for a better coating or printing result, e.g. by corona treatment known in the art.

The substrate coated or printing with the ink composition is generally laminated to protect it. The lamination is carried out by procedures well known to a person skilled in the art. Laminates in general are obtained for example by applying the ink-formulation to surface of a plastic substrate. After drying, a coated substrate is obtained. Subsequently a lamination adhesive is used to fix a second plastic surface to the coated substrate.

### Examples

### Production of the polyvinyl acetals

### PVB-1

800 g polyvinyl alcohol with a viscosity (8% in water) of 7.9 mPas and a degree of hydrolysis of 97.8 mol% was dissolved in 7200 ml water. After adding 2080 mL of 20% hydrochloric acid solution at 50°C the reaction was cooled down to -1 °C and 635 g of n-butyraldehyde was added in two portions. The reaction mixture was heated to 32 °C over a period of 2 hours and was kept at this temperature for further 1.5 hours. The precipitated solid was filtered off and washed sufficiently with water.

The product suspension was adjusted with a 10% aqueous sodium hydroxide solution to pH 11.5, heated to 40 °C and kept at this temperature for 2 hours. Excess base was removed by washing with water. The product was then dried.

### PVB-2

800 g polyvinyl alcohol with a viscosity (4% in water) of 2,82 mPas (DE13033086) and a degree of hydrolysis of 96.9 mol% was dissolved in 7200 ml water. After adding 2080 mL of 20% hydrochloric acid solution at 50°C the reaction was cooled down to -1°C and 37,93 g of acetaldehyde was added followed by the addition of 558.13 g n-butyraldehyde. The reaction mixture was heated to 32°C over a period of 2 hours and was kept at this temperature for further 1.5 hours. The precipitated solid was filtered off and washed sufficiently with water. The product suspension was adjusted with a 10% aqueous sodium hydroxide solution to pH 11.5, heated to 40°C and kept at this temperature for 2 hours. Excess base was removed by washing with water. The product was then dried.

### PVB-3 to PVB-4

The other PVBs (PVB-3 to PVB-4) were obtained in the same manner as described for PVB-2, except that the ratio of acetaldehyde (AcHO) and butyraldehyde (BuHO) was varied. However, the overall degree of acetalization, i.e. the wt% of residual PVA remained constant. Details on the degree of acetalization expressed as remaining OH-content as well as amount of acetaldehyde is shown in table 1.

**Table 1**

| PVB No. | Residual PVA content in wt% | %AcHO of total aldehyde used | %BuHO of total aldehyde used |
|---|---|---|---|
| PVB-1 | 12 | 0 | 100 |
| PVB-2 | 12 | 10 | 90 |
| PVB-3 | 12 | 20 | 80 |
| PVB-4 | 12 | 40 | 60 |

### Preparation of the printing ink

In a second step, a printing ink was prepared as follows: 44.2 g polyvinyl acetal were dissolved in 208.4 g ethanol at room temperature. Subsequently, 88.8 g Irgalite® Blue GLO (pigment available from BASF SE) was added. The resulting mixture was dispersed by using a Getzmann Dispermat®, model CA 40-C, with the following settings:
1) 45 min dispersing time,
2) 650 g glass beads (diameter 2 mm),
3) stirring speed 5000 rpm

Following dispersing, the pigment concentrate was separated from the glass beads on a filter. To prepare the printing ink from the pigment concentrate, 72 g of the pigment concentrate was taken and this initial charge was diluted with a 20% strength by weight solution of the respective polyvinyl acetal in ethanol until the printing ink had a fixed pigment to polyvinyl acetal ratio of 1:1.7. As adhesion promoter the polyethyleneimine product: Lupasol WF (trademark of BASF, Ludwigshafen) was added with 0.75%.

### Application of printing ink

The ink was applied on the treated side (corona technique) of a coextruded OPP film (Oriented Polypropylene Film, obtained from Mitsubishi Chemicals) using a small lab gravure printer (Labratester 180 from Norbert Schläfli Maschinen). The inks were applied as a single layer. The resulting prints were dried at room temperature over a period of about 16 hours, before making a laminate.

### Preparation of the final laminate

The coextruded OPP films with the printed inks prepared above were laminated to a second coextruded OPP film using a polyurethane adhesive to give OPP/OPP laminates according to the following procedure.

A 2-component polyurethane lamination adhesive was prepared by mixing Morchem Hardener CS-90 (3.25 g, obtained from MORCHEM GmbH, Germany), Morchem PS 246 A (50.0 g, obtained from MORCHEM GmbH, Germany) and ethyl acetate (54.8 g).

The freshly prepared adhesive was applied to the second (unprinted) film at a coating weight of 3.0 g/m² (dry), and subsequently dried in the oven for 45s at 80°C to evaporate the solvent. The printed film is then carefully applied with the printed side to the adhesive print, thereby avoiding creation of air bubbles in the laminate. The resulting laminates are stored for 3 days under pressure, in order to allow the adhesive to cure.

### Peel test

A number of 5 strips each has a width of 15 ± 0,1 mm are cut from the cured laminate and the lamination bond strength is tested in a peel test using a tensile testing machine. Measurement is done at a speed of 150 mm/min. The peeling path is at least 20 mm.

During the measurement, the laminated stripe is kept under a constant 90° angle against the film clamps. Measurements was done according to DIN 53357. Sample preparation is in accordance with DIN 16906.

In order to simulate the sterilizing process in the food industry, laminate stripes were treated at 131°C for 30 min using an autoclave (model DX-65 of Systec GmbH, Germany) in steam mode and the peel tests were repeated on these treated laminate stripes. Sterilization was performed according to DIN 16524-5.

Table 2 shows the results of the peel test on the laminates after the autoclave treatment. The results are reported as number of OPP film breakage (designated "B") as opposed to laminate failure by peeling of the laminate (designated "P"). OPP film breakage indicates that the lamination strength with the PVB binder / ink system is higher than the tensile strength of the OPP film itself, indicating very good performance of the PVB as ink binder. The results show that the laminates obtained using a mixed polyvinyl acetal leads to much better quality.

**Table 2: Results of the peel test**

| Sample | Test score |
|---|---|
| PVB-1 | B: 0; P: 5 |
| PVB-2 | B: 3, P: 2 |
| PVB-3 | B: 1, P: 4 |
| PVB-4 | B: 2, P: 5 |

## Claims

1. Use of a polyvinyl acetal as a binder in ink formulations wherein the polyvinyl acetal comprises at least two different acetal groups.

2. The use according to claim 1 wherein the acetal groups independently have 2 to 6 carbon atoms.

3. The use according to claim 1 or 2 wherein the polyvinyl acetal comprises butyraldehyde and acetaldehyde acetal groups.

4. The use according to any one of claims 1 to 3 wherein the polyvinyl acetal has a glass transition temperature (Tg) of 75 to 115 ºC.

5. The use according to any one of claims 1 to 4 wherein the polyvinyl acetal has a melting temperature (Tm) of 150 to 240 ºC.

6. The use according to any one of claims 1 to 5 wherein the residual polyvinyl alcohol in the polyvinyl acetals is 10 to 15% by weight.

7. A printing ink comprising a polyvinyl acetal as a binder wherein the polyvinyl acetal comprises at least two different acetal groups.

8. The printing ink according to claim 7 wherein the acetal groups independently have 2 to 6 carbon atoms.

9. The printing ink according to claim 8 wherein the polyvinyl acetal comprises butyraldehyde and acetaldehyde acetal groups.

10. A process for the sterilization of a food package comprising the steps of
a. printing the food package with a printing ink according to any one of claims 7 to 9 and
b. treating the food package in an autoclave.

11. The process according to claim 10 where the autoclave treatment is performed at a temperature from 120 to 131 ºC.

12. The process according to claim 10 or 11 wherein the autoclave treatment is performed in a steam-saturated atmosphere.
